(19) Europäisches Patentamt
European Patent Office
Office européen des brevets

(11) EP 2 597 484 A1

(12) EUROPEAN PATENT APPLICATION

(43) Date of publication:
29.05.2013 Bulletin 2013/22

(51) Int Cl.:
*G01S 13/82* (2006.01)

(21) Application number: 11190578.2

(22) Date of filing: 24.11.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Nederlandse Organisatie voor
Toegepast
-Natuurwetenschappelijk Onderzoek TNO
2628 VK Delft (NL)

(72) Inventors:
• Elferink, Frans
2628 VK Delft (NL)
• Hoogeboom, Peter
2628 VK Delft (NL)
• Otten, Matern
2628 VK Delft (NL)

(74) Representative: Jansen, Cornelis Marinus et al
V.O.
Johan de Wittlaan 7
2517 JR Den Haag (NL)

(54) **Active FMCW radar system and method for data transfer using the same**

(57) Method of transmitting data in an active FMCW radar system, including: at a transceiver location, generating and transmitting a periodic FMCW transmit signal comprised of a repetition of an unmodulated pulse; at a transponder location, receiving said transmit signal, and generating and transmitting a modulated replica thereof comprising a train of modulated pulses, wherein a said modulated pulse is composed of a plurality of portions of said unmodulated pulse, which portions have been time and/or frequency shifted relative to their respective time and/or frequency position in the unmodulated pulse, so as to modulate message data to be sent from the transponder location to the transceiver location onto the replica; and, at said transceiver location, receiving the modulated replica and demodulating it by determining, for each modulated pulse, a beat signal and at least two beat frequencies modulated therein, so as to retrieve the message data sent from the transponder location.

Fig. 1

**Description**

Field of the invention

The present invention relates to an active Frequency Modulated Continuous Wave (FMCW) radar system, and to a method for transferring data between two terminals, e.g. a transceiver and a transponder, thereof.

Background

An *active* FMCW radar system may include at least two spaced apart terminals: a first terminal A, which may be thought of as a transceiver, and a second terminal B, which may thought of as a transponder. In actuality, the two terminals may be structurally identical and merely assume the different roles of transceiver and transponder. To determine the distance between the two terminals A and B, terminal A typically generates and transmits a stable frequency radio signal that is periodically modulated with a pulse, for example a pulse in the form of a linear frequency chirp, so that it varies with time. Terminal B then receives the transmit signal from terminal A and generates a synchronized replica thereof, which replica it actively sends back to terminal A. At terminal A the replica of the transmit signal from terminal B is received and mixed (multiplied) with the transmit signal as generated by terminal A. Because of the synchronization of the replica at terminal B, the signals mixed at terminal A include a mutual time shift that is equal to the round trip time of the transmit signal and its replica. As a result the mixed signal defines a beat signal at a so-called *beat frequency* that is proportional to the distance between the two terminals A and B. The constant of proportionality follows from the characteristics of the transmit signal and is therefore known. This enables the determination of the distance A-B from the beat frequency, which itself is obtainable by a frequency spectrum analysis of the beat signal.

It is known, for example from WO2011/046,436-A1 (Busking et al.), that the replica of the transmit signal that is to be transmitted back to terminal A by terminal B may be modulated under the control of data to be transmitted from terminal B to terminal A. WO'436 mentions several modulation techniques, including in particular pulse position modulation (PPM).

If, in the case of PPM, the periodic pulse in the transmit signal has a repetition frequency of $f_r$ Hz (i.e. each pulse has a duration of $T_{sweep} = (1/f_r)$ seconds), and terminal A analyzes portions of the beat signal of duration $T_{sweep}$ by means of a *2N*-point Discrete Fourier Transform (DFT) yielding a frequency spectrum with $N$ frequency bins, there are $N$ different possibly detectable beat frequencies per pulse duration, and hence $N$ possible delays that can be used for coding information. The theoretical peak data rate $I$ in bits/s is then given by:

$$I = f_r \cdot {}^2 \log N . \qquad (1)$$

Summary of the invention

Within an existing FMCW radar system, most design parameters are fixed in relation to the system's operating specifications. The sweep bandwidth of a transmit signal pulse, for instance, bears a direct relation to the system's range resolution, while the pulse's chirp rate (i.e. the ratio of the sweep bandwidth to the sweep time) is usually fixed to determine the relation between the value of the beat frequency and the target distance. Furthermore, with a fixed target range, the maximum beat frequency to be detected is a given, and the sampling rate of the employed A/D-converter (as dictated by the Nyquist sampling criterion) is matched to that value.

It is an object of the present invention to provide for a modulation technique that can be implemented in typical, existing FMCW radar topologies with a minimum of modifications, and that provides for an improved data rate as compared the PPM technique briefly discussed above.

It is a further object of the present invention to provide for an active FMCW radar system implementing said modulation technique.

To these ends, a first aspect of the present invention is directed to a method of transmitting data via a frequency modulated continuous wave (FMCW) radar signal. The method includes, at a transceiver location, generating and transmitting a periodic FMCW transmit signal comprised of a repetition of an unmodulated pulse. The method further includes, at a transponder location, receiving said transmit signal, and generating and transmitting a modulated replica of the received transmit signal comprising a train of modulated pulses, wherein a said modulated pulse is composed of a plurality of portions of said unmodulated pulse, which portions (may or may not) have been time and/or frequency shifted relative to their respective time and/or frequency position in the unmodulated pulse, so as to modulate message data to be sent from the transponder location to the transceiver location onto the replica. The method also includes, at said transceiver location, receiving the modulated replica of the transmit signal and demodulating it by determining, for each modulated pulse, a beat signal and at least two beat frequencies modulated therein, so as to retrieve the message data sent from the transponder location.

In the presently disclosed method, the FMCW transmit signal may be formed by a continuous electromagnetic signal that is periodically frequency modulated with a low frequency radar pulse. In different embodiments the radar pulse may have various frequency-to-time-relationships, which may typically include at least one linear FM sweep. The radar pulse may, for example, be defined by a waveform with a sawtooth-like frequency-to-time relationship (i.e. one linear up- or down chirp) or with a triangular frequency-to-time relationship (i.e. one linear up-chirp followed by a corresponding linear down-chirp). It is understood that, in this context, the radar pulse defines the smallest unit of periodicity in the FMCW radar signal. Although the radar pulse is itself modulated on the FMCW transmit signal's carrier at the transceiver location when the transmit signal is generated, it is here referred to as 'unmodulated' to distinguish it from its 'modulated' or modified replica's counterparts that are generated at and sent back from the transponder location.

The modulated replica may be formed by a train of generally unidentical pulses, each having a duration that is substantially the same as, or at least of the same order as, that of the unmodulated radar pulse. Furthermore, each of the modulated pulses may, in a mathematical sense, be at least partially composed of multiple time and/or frequency shifted portions of the unmodulated pulse that defines the FMCW radar signal, in particular by (time domain) superposition and/or catenation of said portions. Hence, a modulated pulse may, at least conceptually, be composed by repetitively (i) selecting a portion of the unmodulated pulse and (ii) time and/or frequency shifting said portion, and, finally, (iii) superposing and/or catenating all said selected and time- and/or frequency-shifted portions to synthesize the modulated pulse. It should be noted that, in this text, the concept 'portion of the unmodulated pulse' may refer to both to a complete unmodulated pulse and to a (for instance rectangular- or otherwise windowed) part thereof. Each respective portion of the unmodulated pulse that is selected as a constituent for the modulated pulse (under (i)) may be subjected to an individual time-and/or frequency shift (under (ii)). Typically, this means that at least one selected portion of the unmodulated pulse is subjected to a time- and/or frequency-shift that is different from that of another constituent portion. The time-shift imposed upon a modulated pulse portion (relative to its time position in the unmodulated pulse) is defined to be zero in case said modulated portion is transmitted from the transponder location in sync with its unmodulated counterpart's reception at the transponder location. Thus, in case the modulated portion is transmitted from the transponder location until after the reception of its unmodulated counterpart at the transponder location is completed, the modulated portion was delayed and subjected to a positive time-shift. Similarly, the frequency-shift imposed upon a modulated pulse portion (relative to its frequency position in the unmodulated pulse) is defined to be zero in case said modulated portion is transmitted from the transponder location at the same frequency (or frequencies) as that (or those) at which the unmodulated counterpart was received at the transponder location.

Making use of conventional FMCW radar technology, the modulated replica may be mixed with the originally transmitted FMCW radar signal to obtain a beat signal, whose frequency spectrum may be analyzed, for example by means of a DFT or frequency counter, to obtain the beat frequencies encoded therein and therewith the message data encoded in the modulated replica. A characteristic of the presently disclosed method is that each modulated pulse is composed of a plurality of portions of the unmodulated pulse, which - by way of modulation - may have been time-and/or frequency shifted relative to their respective time- and/or frequency positions in the unmodulated pulse. (In order not to exclude the modulation of a 'zero-pulse', a zero time- and/or frequency-shift is to be considered a valid time and/or frequency shift.) Consequently, the beat signal associated with a single modulated pulse may be interpreted to contain multiple, i.e. at least two, message-data-reflecting beat frequencies, whereas conventional distance-measurement FMCW radar functionality and PPM use provide for merely one beat frequency per reflected/remitted pulse. This amounts to a significant improvement in the achievable data rate with minimal system adaptations. - It is noted here for clarity that, depending on the precise modulation scheme, the at least two beat frequencies associated with a single modulated pulse may but need not be different frequencies. As will be explained below, a modulated pulse may have been modulated piecewise, such that its beat signal will similarly have to be analyzed piecewise in order to obtain the beat frequency encoded in each of the different pieces. The respective beat frequencies associated with these different pieces of the beat signal need themselves not be different.

A second aspect of the present invention is directed to a transceiver for an active frequency modulated continuous wave (FMCW) radar system. The transceiver may include a signal generator configured to generate a periodic FMCW transmit signal comprised of a repetition of an unmodulated pulse; a transmit antenna that is operatively connected to the signal generator and configured to transmit the transmit signal towards a transponder; a receive antenna (which may physically be the same as the transmit antenna) configured to receive a modulated replica of the transmit signal comprising a train of modulated pulses from the transponder; a mixer having a first input operatively connected to the signal generator and a second input operatively connected to the receive antenna, and configured to mix the transmit signal and the modulated replica thereof so as to produce, on an output of the mixer, a beat signal for each modulated pulse; and a demodulator that is operatively connected to the output of the mixer and configured to demodulate the modulated replica by determining for the beat signal of each modulated pulse at least two beat frequencies modulated therein, so as to retrieve message data sent by the transponder.

A third aspect of the present invention is directed to a transponder for an active frequency modulated continuous wave (FMCW) radar system. The transponder may include a receive antenna configured to receive a periodic FMCW transmit signal comprised of a repetition of an unmodulated pulse from a transceiver; a transmit antenna configured to transmit a modulated replica of the transmit signal back towards the transceiver; and a modulator, operatively connected to the receive antenna and the transmit antenna, and configured to generate and cause the transmission of the modulated replica of the transmit signal comprising a train of modulated pulses, wherein each modulated pulse is modulated such that its beat signal, to be generated at the transceiver, defines two beat frequencies reflecting message data sent by the transponder.

These and other features and advantages of the invention will be more fully understood from the following detailed description of certain embodiments of the invention, taken together with the accompanying drawings, which are meant to illustrate and not to limit the invention.

Brief description of the drawings

Fig. 1 shows a simplified block diagram of an active FMCW radar system including a transceiver A and a transponder B, which are disposed at a distance from each other;

Fig. 2 schematically illustrates the synthesis of a modulated pulse by dividing a linear chirp into multiple linear sub-chirps and time-shifting the sub-chirps to modulate the pulse;

Fig. 3 schematically illustrates the synthesis of a modulated pulse by dividing a linear chirps into multiple linear sub-chirps and frequency-shifting the sub-chirps to modulate the pulse; and

Fig. 4 schematically illustrates the synthesis of a modulated pulse by superposing multiple uniquely time-shifted copies of an unmodulated linear chirp.

Detailed description

In order to clarify the exposition of the present invention, the discussion thereof is preceded by an elucidation of the operating principle and construction of a conventional FMCW radar system.

A conventional passive FMCW radar system may include a transceiver configured to generate and transmit a periodic FMCW radar signal, comprised of a repetition of a pulse. The pulse may typically be a linear chirp, i.e. a signal having an instantaneous frequency that varies linearly with time, according to the equation

$$y(t) = A_c \cos\left(\omega_c t + \frac{A_b}{2} t^2\right), \qquad (2)$$

wherein $A_c$ denotes the amplitude of the carrier wave onto which the actual chirp was frequency modulated, $\omega_c$ denotes the angular frequency of the carrier wave [rad/s], $t$ denotes time [s], and $A_b$ denotes the chirp rate, i.e. the rate at which the angular frequency of the actual chirp changes with time [rad/s$^2$]. The instantaneous angular frequency $\omega$ [rad/s] of the chirp according to eq.(2) may be obtained by differentiating the argument of the cosine, and is given by

$$\omega = \omega_c + A_b t, \qquad (3)$$

which clearly reveals the chirp's linear nature. The chirp may be transmitted towards a target through an antenna, which may reflect it. An echo $y'(t)$ of the transmit signal $y(t)$ that is received by the transceiver after a round trip time $T_R$ [s] may be described by the equation

$$y'(t) = A_c \cos\left(\omega_c (t - T_R) + \frac{A_b}{2} (t - T_R)^2\right), \qquad (4)$$

and be mixed, i.e. multiplied, with a portion of the transmit signal $y(t)$ to obtain

$$y_{beat}(t) = \frac{A_c^2}{2}\left[\begin{array}{l}\cos\left(\left(2\omega_c - A_b T_R\right)t + A_b t^2 + \left(\frac{A_b}{2}T_R^2 - \omega_c T_R\right)\right) \\ + \cos\left(A_b T_R t + \left(\omega_c T_R - \frac{A_b}{2}T_R^2\right)\right)\end{array}\right]. \tag{5}$$

The first cosine term in eq.(5) describes a linearly increasing FM signal or up-chirp at about twice the carrier frequency with a phase shift that is proportional to the round trip time $T_R$. This term is generally filtered out either actively, or because it is beyond the cut-off frequency of the mixer and subsequent transceiver components. The second cosine in eq.(5) describes a *beat signal* at a fixed *beat frequency* $f_b$ [Hz], which may be obtained by differentiating the instantaneous phase term with respect to time:

$$f_b = \frac{1}{2\pi}\frac{d}{dt}\left[\cos\left(A_b T_R t + \left(\omega_c T_R - \frac{A_b}{2}T_R^2\right)\right)\right] = \frac{A_b}{2\pi}T_R. \tag{6}$$

Eq.(6) demonstrates that the beat frequency $f_b$ is proportional to the round trip time $T_R$ or time-shift between the transmit signal $y(t)$ and the receive signal $y'(t)$, and is in fact equal to the difference in instantaneous frequencies between these signals. For the purpose of determination of the distance to the target, eq.(6) may be rewritten as

$$f_b = \frac{A_b}{2\pi}T_R = \frac{B_{sweep}}{T_{sweep}}\frac{2R}{c}, \tag{7}$$

wherein $B_{sweep}$ is the sweep bandwidth [Hz], $T_{sweep}$ is the chirp duration [s], $R$ is the distance to the target [m], and c is the speed of light [m/s].

For clarity of exposition the transmit signal $y(t)$ and receive signal $y'(t)$ as specified by eq.(2) and eq.(3), respectively, define only one pulse of infinite length, while actual transmit and receive signals $y(t)$, $y'(t)$ would contain a periodic sequence of pulses of finite length. The operating principle is such an actual case is the same, however, and transmit and receive signals will generally be referred to in this text as $y(t)$ and $y'(t)$.

FMCW radar technology has traditionally been used with passive targets, i.e. targets that merely reflect or backscatter the (energy of the) transmit signal $y(t)$. More recent developments, however, have focused on active targets or transponders, which reproduce the transmit signal $y(t)$ and actively transmit a replica $y'(t)$ back to the transceiver, for example with substantially the same power as the transmit signal was sent originally. In case an FMCW radar system including such a transponder is used to perform distance measurements, the replica of the transmit signal $y'(t)$ must be synchronized with the transmit signal $y'(t)$ to ensure that the beat frequency $f_b$ detected at the transceiver is still proportional to the round trip time $T_R$, in line with eq.(6). Here 'synchronized' means that the time mark for the start of the transmittal of a (non-time-shifted) pulse by the transponder is provided by the start of the receipt of a pulse from the transceiver by the transponder.

It will be clear without theoretical elaboration that an FMCW radar system including a transponder offers a significantly improved range in comparison with a system that relies on passive targets. In addition, a transponder may be capable of more than just generating a synchronized replica $y'(t)$ of the originally transmitted signal $y(t)$. It may in particular be capable of modulating the replica, so as to transfer message data (back) to the transceiver.

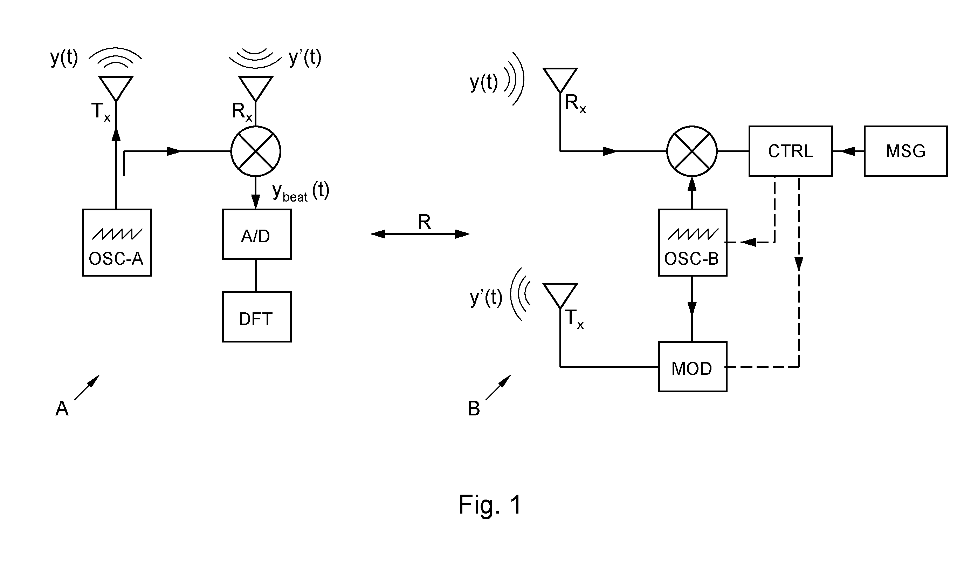

Fig. 1 shows a simplified block diagram of a conventional active FMCW radar system including a transceiver A positioned at a transceiver location, and a transponder B positioned at a transponder location that is spatially separated from the receiver location. The system is capable of transmitting message data from the transponder B to the transceiver A by means of a modulated replica.

The transceiver A may include a signal generator OSC-A for generating an FMCW transmit signal $y(t)$. The signal generator OSC-A may be operatively connected to a transmit antenna (Tx) via which the transmit signal $y(t)$ may be transmitted. The transceiver A may further include a receive antenna (Rx) for receiving a receive signal $y'(t)$ originating from the transponder B. A mixer ($\otimes$) may be coupled to both the signal generator OSC-A and the receive antenna (Rx), and be configured to multiply the receive signal $y'(t)$ with the transmit signal $y(t)$. The transceiver A may also include a demodulator to which the output signal $y_{beat}(t)$ from the mixer ($\otimes$) may be fed. The demodulator may, for example, comprise an A/D-converter and a DFT-processor, such that the output signal $y_{beat}(t)$ from the mixer may be successively sampled and subjected to a discrete Fourier transform so as to retrieve any information that was beat frequency-encoded therein.

The transponder B, in turn, may include a receive antenna (Rx), a signal generator OSC-B similar to that of the transceiver A, and a mixer ($\otimes$) that is operatively connected to both and configured to multiply the signal from the local signal generator OSC-B with the transmit signal $y(t)$ received by the receive antenna (Rx) and originating from the transceiver A. The transponder B may further include a modulator, which may include a controller CTRL and a modulating device MOD. The controller CTRL may be connected to an output of the mixer ($\otimes$) and to an input of the signal generator OSC-B, and be configured to detect a time and/or frequency difference between the locally generated signal and the transmit signal $y(t)$ received from the transceiver A, and to synchronize and/or frequency-match the former signal with the latter by adjusting the input to the signal generator OSC-B. The controller CTRL may further be connected to a message data buffer comprising message data MSG, and to the modulating device MOD. The latter, in turn, may further be may be operatively connected to the local signal generator OSC-B and a transmit antenna (Tx). Under the control of the controller CTRL, the modulating device MOD may modulate the synchronized replica from the signal generator OSC-B with message data MSG, such that a modulated replica $y'(t)$ may subsequently be transmitted via the transmit antenna (Tx) of transponder B.

In known implementations of an active FMCW radar system similar to that shown in Fig. 1 and set up to determine the distance R between the transceiver A and the transponder B, the transponder B may be configured to merely generate and transmit an unmodulated synchronized replica $y'(t)$ of the transmit signal $y(t)$ back to the transceiver A. The transceiver A may analyze the receive signal by successively mixing the replica $y'(t)$ with the transmit signal $y(t)$ (cf. eq.(5)), sampling the resulting beat signal $y_{beat}(t)$ at a sampling frequency $f_s$ by means of the A/D-converter, and performing a *2N*-point DFT on a portion of the sampled beat signal with duration $T_{sweep}$. This may yield a frequency spectrum with N frequency bins (harmonics) having a bin width of $(f_s/2N)=(1/T_{sweep})$ Hz, which bin width defines the frequency resolution of the system. Each of the N frequency bins is centered on a beat frequency $f_b=(l-1)\cdot(f_s/2N)$, with *l* an integer in the range [1, *N*], that corresponds to a certain time delay $\tau$ given by

$$\tau = \frac{2\pi}{A_b} f_b = (l-1)\frac{\pi f_s}{N A_b} = (l-1)\frac{1}{B_{sweep}}, \text{ with } l\text{=}1,2,3,...,N \qquad (8)$$

wherein $(1/B_{sweep})$ defines the corresponding time delay resolution of the system. For FMCW distance detection, there is only one time delay $\tau$ per sweep time $T_{sweep}$ to keep track of, and hence (absent of spectral leakage) only one of the N available frequency bins of the DFT is used. The same is true in case the transponder B of the active FMCW radar system is set up to modulate the replica according to the PPM scheme, which leads to a relatively low peak data rate for this type of modulation; see eq.(1).

The present invention proposes a number of modulation techniques that can be implemented in typical, existing FMCW radar topologies (cf. Fig. 1) with a minimum of modifications, and that provide for improved data rates as compared to PPM.

In one approach to improve the data rate relative to PPM a single unmodulated pulse, such as in particular a linear chirp, of a replica of an FMCW transmit signal, having a sweep time $T_{sweep}$ and a sweep bandwidth $B_{sweep}$, may be divided into *k* sub-chirps, each having a sweep time $(T_{sweep}/k)$ and a sweep bandwidth $(B_{sweep}/k)$. The replica may then be modulated by time-shifting and/or frequency-shifting the sub-chirps.

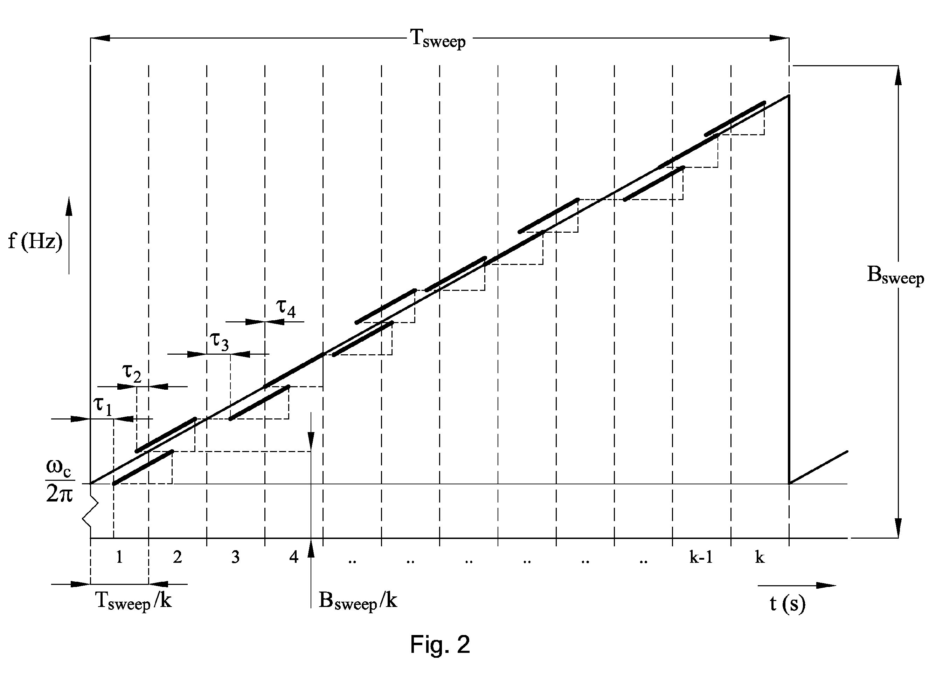

Fig. 2 schematically illustrates the time-shifting variant. The diagram shows a frequency versus time graph of a synchronized replica of the originally transmitted linear chirp. The replica has been divided into *k* linear sub-chirps, numbered *i=1, 2, ..., k-1, k,* each having a sweep time $(T_{sweep}/k)$ and a sweep bandwidth $(B_{sweep}/k)$. In order to modulate the replica, each of the sub-chirps *i* is time-shifted relative to its original time-position within the replica by an individual time-shift value $\tau_i$. In general an imposed time-shift value $\tau_i$ may correspond to a time-shift offset (which is the same for all sub-chirps in the modulated pulse) plus an integer multiple of the time delay resolution of the employed radar system (see eq.(8)), wherein a magnitude of the integer multiple may lie in the range $[0, (T_{sweep}/k)\rangle$. In one embodiment, the offset may be used to discount or negate the expected time delay $(2R/c$, cf. eq.(7)) associated with the round trip of the radar signal, so as to ensure that the beat signal of the modulated pulse does not include any beat frequencies indicative of the round trip time. In other embodiments, the offset may simply be zero. To synthesize the modulated replica, the time-shifted linear sub-chirps may be a superposed and/or catenated in the time domain.

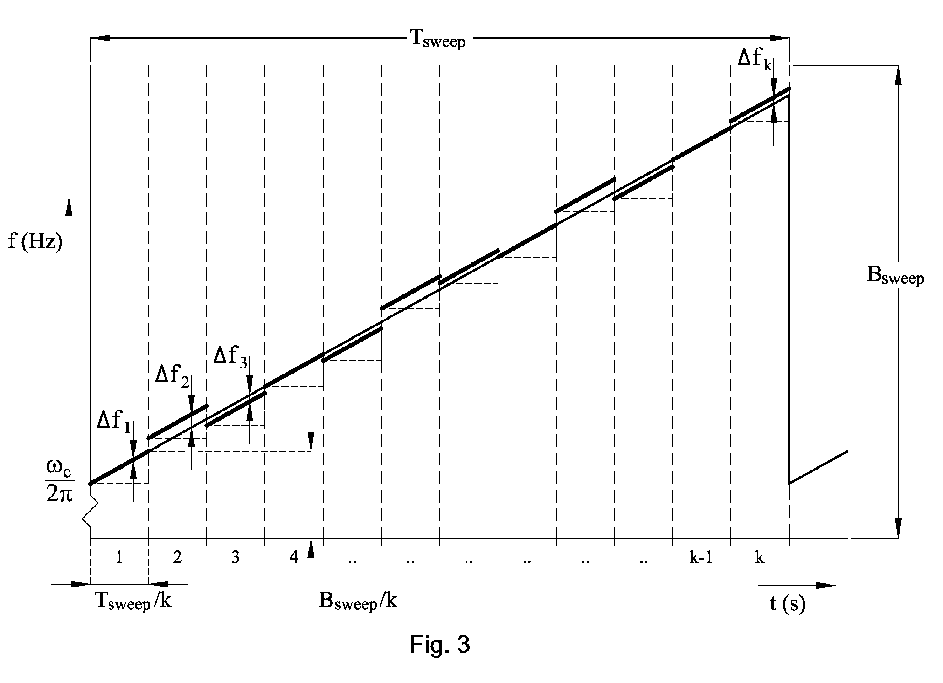

Fig. 3 schematically illustrates the frequency-shifting variant. The diagram shows a frequency versus time graph of a synchronized replica of the originally transmitted linear chirp. The replica has been divided into *k* linear sub-chirps, numbered *i=1, 2, ..., k-1, k,* each having a sweep time $(T_{sweep}/k)$ and a sweep bandwidth $(B_{sweep}/k)$. In order to modulate the replica, each of the sub-chirps $i$ is frequency-shifted relative to its respective original carrier or base frequency by an individual frequency-shift value $\Delta f_i$. A magnitude of a frequency-shift value $\Delta f_i$ may typically lie in the range [0, ($B_{sweep}$/$k$)⟩, and effectively correspond an integer multiple of the frequency resolution of the employed radar system. An additional frequency-shift-offset may be imposed on all sub-chirps in a modulated pulse to discount or negate the expected time delay associated with the round trip of the radar signal, so as to ensure that the beat signal of the modulated pulse does not include any beat frequencies indicative of the round trip time. To synthesize the modulated replica, the frequency-shifted linear sub-chirps may simply be catenated.

It will be clear that the above-described embodiments of Fig. 2 (time-shifting sub-chirps) and Fig. 3 (frequency-shifting sub-chirps) may be combined into another embodiment wherein the sub-chirps are both time-and frequency-shifted.

To demodulate a replica modulated according to any of the preceding embodiments, it may be mixed, i.e. multiplied, with the originally transmitted signal to produce a beat signal. The beat signal may be subjected to a frequency spectrum analysis, for example by means of a Fourier transform performed on a sampled version of the beat signal. Each sub-chirp-related portion of the beat signal may be analyzed separately for beat frequencies encoded therein. In case the spectrum analyzer of the FMCW radar system normally analyzes portion of the beat signal with a duration $T_{sweep}$ in $N$ frequency bins each, there are now ($N/k$) frequency bins per sub-chirp. With a total of $k$ sub-chirps per time interval $T_{sweep}$, the effective theoretical peak data rate $I$ in bits/s is given by:

$$ I = \frac{1}{T_{sweep}} \cdot {}^2\log\left(\frac{N}{k}\right)^k = kf_r \cdot {}^2\log\left(\frac{N}{k}\right). \qquad (9) $$

For example, when the chirp repetition frequency $f_r$=10kHz, each chirp is divided into $k$=8 sub-chirps, and $N$=128 frequency bins are available per chirp, the effective theoretical peak data rate amounts to 32 kbits/s, compared to only 7kbit/s in the case of PPM.

In the above described approaches, a replicated chirp is divided into $k$ sub-chirps, which are then subjected to an individual time-shift $\tau_i$ and/or frequency-shift $\Delta f_i$ so as to cause the $k$ respective frequency spectra of their beat signals to show one of ($N/k$) possible frequencies. Although this leads to a generally higher peak data rate $I$ than obtained with PPM (see eq.(9) and eq.(1) respectively), the data rate may be optimized further.

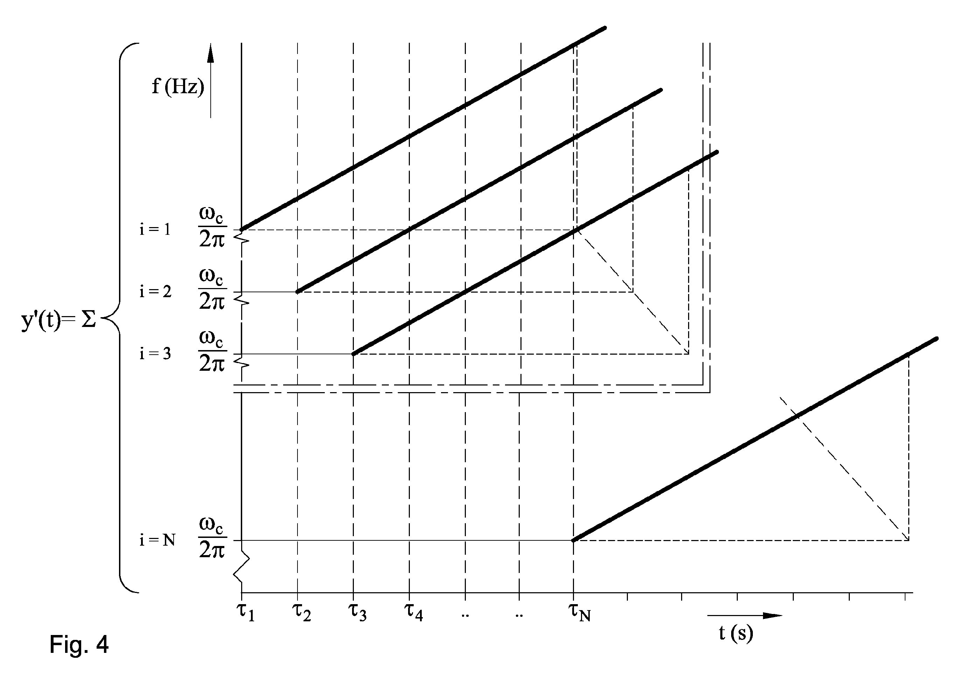

In another embodiment of the present invention, which is illustrated in Fig. 4, each pulse, e.g. a linear chirp, in the modulated replica $y'(t)$ may be constructed by superposing a maximum of $N$ pulses $y_i(t)$, each identical to the unmodulated pulse $y(t)$ in the original transmit signal but subject to an individual time-shift $\tau_i$. The time-shift $\tau_i$ may generally correspond to a common offset (which, as described above, may be used to negate the effect of the round trip time of the radar signal on the frequency spectrum of the beat signal) plus an integer multiple of the time delay resolution of the employed system (see eq.(8)). I.e. the first pulse in the summation may be subject to a time-shift $\tau_1$=0 (plus a certain offset, if any), the second pulse in the summation may be subject to a time-shift $\tau_1$=1/$B_{sweep}$ (plus the offset), etc. It is understood that modulation of the pulse is effected through the inclusion or exclusion of a certain pulse $i$ in or from the summation. That is, each of the N frequency bins in the DFT used to analyze the spectrum of the beat signal associated with the modulated pulse may be on/off coded by either including a correspondingly time-shifted pulse $i$ in the modulated replica, or omitting it (in which case $y_i(t$-$\tau_i)$=0). With this in mind, the modulated replica may be represented as:

$$ y'(t) = \sum_{i=1}^{N} y_i(t - \tau_i). \qquad (10) $$

Thus, each modulated pulse $y'(t)$ provides for $N$ bits of information, which in the case of a pulse repetition frequency $f_r$ yields a peak data rate I in bit/s of:

$$ I = f_r N. \qquad (11) $$

As one skilled in the art will appreciate, the presently disclosed modulation techniques may be used in conjunction with known modulation techniques to further increase the stated peak data rates. Additional information may, for example, be encoded in the amplitudes of the portions of the unmodulated pulse that are included into a modulated pulse (AM), or in their phases (e.g. by means of Quadrature Phase Shift Keying (QPSK)).

Although illustrative embodiments of the present invention have been described above, in part with reference to the accompanying drawings, it is to be understood that the invention is not limited to these embodiments. Variations to the disclosed embodiments can be understood and effected by those skilled in the art in practicing the claimed invention, from a study of the drawings, the disclosure, and the appended claims. Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, it is noted that particular features, structures, or characteristics of one or more embodiments may be combined in any suitable manner to form new, not explicitly described embodiments.

## Claims

1. A method of transmitting data in an active frequency modulated continuous wave (FMCW) radar system, including:

   - at a transceiver location, generating and transmitting a periodic FMCW transmit signal ($y(t)$) comprised of a repetition of an unmodulated pulse;
   - at a transponder location,

      o receiving said transmit signal;
      o generating and transmitting a modulated replica ($y'(t)$) of the received transmit signal comprising a train of modulated pulses, wherein a said modulated pulse is composed of a plurality of portions of said unmodulated pulse, which portions have been time and/or frequency shifted relative to their respective time and/or frequency position in the unmodulated pulse, so as to modulate message data to be sent from the transponder location to the transceiver location onto the replica;

   - at said transceiver location, receiving the modulated replica of the transmit signal and demodulating it by determining, for each modulated pulse, a beat signal ($y_{beat}(t)$) and at least two beat frequencies modulated therein, so as to retrieve the message data sent from the transponder location.

2. The method according to claim 1, wherein said unmodulated pulse includes at least one linear FM sweep.

3. The method according to claim 1 or 2, wherein determining, for each modulated chirp, a beat signal and at least two beat frequencies modulated therein includes:

   - producing the beat signal ($ybeat(t)$) by mixing at least a part of the modulated replica ($y'(t)$) comprising at least part of the respective modulated chirp with a corresponding part of the unmodulated chirp of the FMCW transmit signal ($y(t)$); and
   - analyzing a frequency spectrum of the beat signal to determine at least two beat frequencies reflecting message data encoded therein.

4. The method according to claim 3, wherein analyzing the frequency spectrum of the beat signal includes:

   - digitally sampling the respective beat signal ($y_{beat}(t)$); and
   - performing at least one Discrete Fourier Transform (DFT) on the sampled beat signal.

5. The method according to claim 4, wherein the pulses in the transmit signal have a repetition frequency of $f_r$ Hz, wherein a sampled beat signal corresponding to one modulated pulse is analyzed by means of a DFT defining $N$ frequency bins, and wherein the message data is sent from the transponder location to the receiver location at a data rate $I$ in bit/s obeying the inequality:

$$I > f_r \cdot^2 \log N .$$

6. The method according to any of the claims 1-5, wherein the unmodulated pulse includes a linear chirp having a sweep time $T_{sweep}$ and a sweep bandwidth $B_{sweep}$, and is considered to comprise $k$ successive sub-chirps, each having a sweep time $T_{sweep}/k$ and a sweep bandwidth $B_{sweep}/k$, and
wherein a said portion of the unmodulated chirp is formed by a said sub-chirp.

7. The method according to claim 6, wherein, in composing a modulated pulse, said $k$ portions of the unmodulated chirp have been time-shifted over a common time-shift offset plus an individual time-shift value ($\tau_i$), wherein a magnitude of the individual time-shift value is less than $T_{sweep}/k$.

8. The method according to claim 7, wherein said individual time-shift value is equal to an integer multiple of the time delay resolution of the demodulation process.

9. The method according to claim 7 or 8, wherein, in composing a modulated pulse, said $k$ portions of the unmodulated chirp have been frequency-shifted over a common frequency-shift offset plus an individual frequency-shift value ($\Delta f_i$), wherein a magnitude of the individual frequency-shift value is less than ($B_{sweep}/k$).

10. The method according to claim 9, wherein said individual frequency-shift value is equal to an integer multiple of the frequency resolution of the demodulation process.

11. The method according to any of the claims 7-10, wherein the common time-shift, the common frequency-shift, or the combined effect of the common time- and frequency-shift discounts for the sum of the time it takes the transmit signal to travel from the transceiver location to the transponder location and the time it takes the modulated replica to travel from the transponder location back to the transceiver location, such that the beat signal determined for a modulated pulse does not include a beat frequency indicative of a distance between the transceiver location and the transponder location.

12. The method according to any of the claims 1-5, wherein a said portion of the unmodulated pulse is formed by substantially the entire unmodulated pulse.

13. A transceiver for an active frequency modulated continuous wave (FMCW) radar system, including:

   - a signal generator configured to generate a periodic FMCW transmit signal comprised of a repetition of an unmodulated pulse;
   - a transmit antenna that is operatively connected to the signal generator and configured to transmit the transmit signal towards a transponder;
   - a receive antenna configured to receive a modulated replica of the transmit signal comprising a train of modulated pulses from the transponder;
   - a mixer having a first input operatively connected to the signal generator and a second input operatively connected to the receive antenna, and configured to mix the transmit signal and the modulated replica thereof so as to produce, on an output of the mixer, a beat signal for each modulated pulse; and
   - a demodulator that is operatively connected to the output of the mixer and configured to demodulate the modulated replica by determining for the beat signal of each modulated pulse at least two beat frequencies modulated therein, so as to retrieve message data sent by the transponder.

14. A transponder for an active frequency modulated continuous wave (FMCW) radar system, including:

   - a receive antenna configured to receive a periodic FMCW transmit signal comprised of a repetition of an unmodulated pulse from a transceiver;
   - a transmit antenna configured to transmit a modulated replica of the transmit signal back towards the transceiver;
   - a modulator, operatively connected to the receive antenna and the transmit antenna, and configured to generate and cause the transmission of the modulated replica of the transmit signal comprising a train of modulated pulses, wherein each modulated pulse is modulated such that its beat signal, to be generated at the transceiver, defines two beat frequencies reflecting message data sent by the transponder.

15. An active frequency modulated continuous wave (FMCW) radar system, including:

   - at least one transceiver (A) according to claim 13, positioned at a transceiver location; and
   - at least one transponder (B) according to claim 14, positioned at a
   transponder location spaced apart from the transceiver location,

wherein said at least one transceiver (A) and transponder (B) are configured for mutual cooperation.

Fig. 1

Fig. 2

EP 2 597 484 A1

Fig. 3

Fig. 4

Europäisches
Patentamt

European
Patent Office

Office européen
des brevets

# EUROPEAN SEARCH REPORT

Application Number

EP 11 19 0578

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | WO 2008/118019 A2 (TNO [NL]; ELFERINK FRANCISCUS HEDRIKUS [NL]; BUSKING ERIK BERT [NL]) 2 October 2008 (2008-10-02)<br>* abstract; figures 1,10 *<br>* page 2, line 10 - page 5, line 11 *<br>* page 7, line 16 - page 8, line 15 *<br>* page 12, lines 15-28 *<br>----- | 1-8, 13-15<br><br>9-12 | INV.<br>G01S13/82 |
| A | WO 01/23906 A1 (SIEMENS AG [DE]; HEIDE PATRIC [DE]; VOSSIEK MARTIN [DE]) 5 April 2001 (2001-04-05)<br>* abstract; figures 1, 3 *<br>* page 1, line 17 - page 3, line 26 *<br>* page 6, line 34 - page 11, line 5 *<br>* page 17, line 12 - page 19, line 24 *<br>----- | 1,13,15 | |
| A | WO 03/040753 A1 (SIEMENS AG [DE]; NALEZINSKI MARTIN [DE]; VOSSIEK MARTIN [DE]; WIEBKING) 15 May 2003 (2003-05-15)<br>* abstract; figure 1 *<br>* page 4, line 21 - page 6, line 9 *<br>----- | 1,13,14 | |

TECHNICAL FIELDS
SEARCHED      (IPC)

G01S

The present search report has been drawn up for all claims

| Place of search | Date of completion of the search | Examiner |
|---|---|---|
| Munich | 28 March 2012 | López de Valle, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 19 0578

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2012

| Patent document cited in search report | | Publication date | Patent family member(s) | | Publication date |
|---|---|---|---|---|---|
| WO 2008118019 | A2 | 02-10-2008 | NONE | | |
| WO 0123906 | A1 | 05-04-2001 | DE | 19946161 A1 | 26-04-2001 |
| | | | EP | 1216424 A1 | 26-06-2002 |
| | | | WO | 0123906 A1 | 05-04-2001 |
| WO 03040753 | A1 | 15-05-2003 | CN | 1613019 A | 04-05-2005 |
| | | | DE | 10155251 A1 | 18-06-2003 |
| | | | DE | 10295157 D2 | 07-10-2004 |
| | | | EP | 1442318 A1 | 04-08-2004 |
| | | | JP | 2005508503 A | 31-03-2005 |
| | | | US | 2005012653 A1 | 20-01-2005 |
| | | | WO | 03040753 A1 | 15-05-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011046436 A1, Busking